# EUROPÄISCHE PATENTSCHRIFT

(11) **EP 2 843 137 B1**
(45) Veröffentlichungstag und Bekanntmachung des Hinweises auf die Patenterteilung: **22.02.2017**
(21) Anmeldenummer: 13182780.0
(22) Anmeldetag: 03.09.2013
(51) Int. Cl.: E02D 5/46

(54) **Verfahren und Anordnung zum Ermitteln des Radius eines mittels Düsenstrahlverfahren herstellbaren Bodenelements**
Method and apparatus for determining the radius of a floor element that can be produced by means of jet blasting
Procédé et agencement destinés à la détermination du rayon d'un élément de sol pouvant être fabriqué au moyen d'un procédé de courant-jet

(43) Veröffentlichungstag der Anmeldung: 04.03.2015
(73) Patentinhaber: Keller Holding GmbH, 63067 Offenbach/Main (DE)
(72) Erfinder: Schaden, Hans Jürgen, 7503 Jabing (AT)
(74) Vertreter: Oberwalleney, Stephan

(56) Entgegenhaltungen:
- DE-A1- 19 521 639
- DE-A1- 19 731 223

## Beschreibung

Die Erfindung betrifft ein Verfahren und eine Anordnung zum Ermitteln des Radius beziehungsweise des Durchmessers eines insbesondere mittels Düsenstrahlverfahren herstellbaren Bodenelements.

Zur Verfestigung des Untergrundes, beispielsweise bei Unterfangungen, oder zur Abdichtung, beispielsweise unter Staudämmen oder von Baugrubensohlen, kommt die Injektionstechnik zur Anwendung, die auch als Düsenstrahlverfahren bekannt ist. Unter dem Düsenstrahlverfahren wird eine Bodenvermörtelung verstanden, bei der mit Hilfe eines energiereichen Schneidstrahles aus Wasser oder einer Zementsuspension der im Bereich des Bohrloches anstehende Boden aufgeschnitten beziehungsweise erodiert wird. Der Schneidstrahl, der auch mit Luft ummantelt werden kann, wird mit hohen Austrittsgeschwindigkeiten in den Boden injiziert. Der erodierte Boden wird umgelagert und mit Zementsuspension vermischt. Die Mischung wird teilweise durch den Bohrlochringraum zum Bohrlochmund gespült. Es können Bauelemente verschiedenster geometrischer Formen hergestellt werden. Die Erosionsweite des Düsenstrahles im Baugrund reicht je nach Boden, Verfahrensart und verwendeter Flüssigkeit bis zu 2,5 Meter.

Das Düsenstrahlverfahren wird im Spezialtiefbau verwendet. Die Herstellung von verfestigten Bodensäulen mit diesem Verfahren erfolgt verfahrensbedingt ohne Sichtkontrolle. Insofern können Ungleichmäßigkeiten im Bodengefüge oder Änderung von Verfahrensparametern bei der Herstellung zu einer verminderten Qualität der erstellten Bodensäulen führen. Aus diesem Grund werden in der Regel Probesäulen vor Beginn der eigentlichen Düsenstrahlarbeiten hergestellt und analysiert. Es sind bereits verschiedene Methoden zur Durchmesserbestimmung von mittels Düsenstrahlverfahren hergestellten Bodensäulen bekannt, beispielsweise thermische Durchmesserbestimmung oder Hydrophonaufzeichnung.

Aus der DE 195 21 639 A1 ist ein Verfahren zur Überwachung eines Hochdruckinjektions-Verfahrens bekannt. Es wird ein Hochdruckinjektionsgestänge mit einer Austrittsdüse für einen Hochdruckstrahl in den Boden getrieben. Beim Ziehen und gleichzeitigen Drehen des Gestänges ,wird der Boden durch den in einem Düsvorgang erzeugten Hochdruckstrahl aufgeschnitten und mit Injektionsgut vermischt. Während des Düsvorgangs werden die Bodenerschütterungen in der Umgebung des Hochdruckinjektionsgestänges erfasst und ausgewertet. Auf diese Weise werden Informationen über die Reichweite des Hochdruckstrahls gewonnen, auf deren Basis die Parameter des Düsvorganges gezielt variiert werden können.

Aus der AT 505 438 A1 ist ein Verfahren zur Bestimmung der radialen Ausdehnung und des Gehalts an hydraulisch bindenden Materialien von mittels Düsenstrahlverfahren hergestellten Körpern (DSV-Körper) bekannt. Hierfür wird eine erste Temperaturmesskurve in einem vorgebbaren Zeitbereich in einem ersten Bereich des DSV-Körpers gemessen, diese erste Temperaturmesskurve wird dann mit Vergleichskurven vergleichen. Die Temperaturmesskurven erlauben Rückschlüsse über Abmessungen und Festigkeit der erstellten DSV-Säulen.

Aus DE 197 31 223 A1 sind eine Vorrichtung und ein Verfahren zum Ermitteln der Wirkweite eines Hochgeschwindigkeitserosionsverfahrens in Baugrund bekannt. Hierfür ist nach einer Ausführungsform vorgesehen, dass die von dem Düsenstrahl auf die Pegelrohre ausgeübten Beschleunigungen gemessen werden, die je nach Entfernung des Düsentrahls unterschiedliche Intensität haben. Dabei werden die Beschleunigungen mit einem Schwingungsaufnehmer im Pegelrohr aufgenommen, wobei in dem Pegel eine Flüssigkeitssäule vorgesehen ist.

Die thermische Durchmesserbestimmung erfordert eine lange Vorlaufzeit, außerdem besteht ein Nachteil darin, dass keine sofortige Auswertung möglich ist. Die Durchmesserbestimmung mittels Geophon ist nur bis zu einer bestimmten Tiefe möglich, welche je nach Boden etwa 8 bis 15 Metern beträgt. Außerdem ist ein synchrones Ziehen von Düsenstrahlgestänge und Mikrophon erforderlich, was einen erhöhten technischen Aufwand zur Folge hat und, bei Abweichungen der Ziehgeschwindigkeiten, auch zu Messungenauigkeiten führen kann.

Der vorliegenden Erfindung liegt die Aufgabe zugrunde, ein verbessertes Verfahren zur Radius- oder Durchmesserbestimmung von Bodensäulen, insbesondere von mittels Düsenstrahlverfahren hergestellten Bodensäulen, vorzuschlagen, das schnell durchgeführt werden kann und auch in großen Tiefen anwendbar ist. Die Aufgabe besteht ferner darin, eine entsprechende Anordnung zur Radius- oder Durchmesserbestimmung von Bodensäulen vorzuschlagen.

Die Lösung besteht in einem Verfahren zum Ermitteln des Radius einer mittels Düsenstrahlverfahrens herstellbaren Bodenelements, mit den Schritten: Einbringen zumindest einer Pegelstange in den Boden; Abteufen eines Düsenstrahlwerkzeugs, wobei ein definierter Abstand zwischen Pegelstange und Düsenstrahlwerkzeug insbesondere kleiner ist als eine maximale Reichweite des Düsenstrahls; Ziehen des Düsenstrahlwerkzeugs unter Dreh- oder Schwenkbewegung bei aktiviertem Düsenstrahl, wobei beim Passieren des Düsenstrahls an der Pegelstange Schwingungen erzeugt werden; und Erfassen eines Schwingungen repräsentierenden Signals an der zumindest einen Pegelstange mittels eines Sensors, der mit der Pegelstange verbunden ist.

Ein Vorteil besteht darin, dass das Verfahren zeitgleich mit der Herstellung des Bodenelements durchgeführt werden kann. Schon während oder unmittelbar nach Herstellung des Bodenelements ist eine Auswertung der Messergebnisse möglich, welche Rückschlüsse auf den Radius beziehungsweise den Durchmesser des Elements erlauben. Insgesamt ist das Verfahren schnell und einfach durchführbar. Ein weiterer Vorteil besteht darin, dass das Verfahren auch für zuverlässige Messungen in größeren Tiefen von mehr als 10 Metern verwendet werden kann. Das Erfassen der Schwingungen erfolgt, während mit dem Düsenstrahlwerkzeug Injektionsmittel in den Boden eingepresst wird. Mit der maximalen Reichweite des Düsenstahls ist insbesondere eine Reichweite gemeint, bis zu der das Injektionsmittel in den Boden eindringt, respektive Schwingungen an der Pegelstange messbar sind.

Mit dem Düsenstahlwerkzeug lassen sich säulen-, halbsäulen- oder lamellenartige Bodenelemente erzeugen, die auch als Bodenverbesserungskörper oder Bodensäulen bezeichnet werden. Die Form der Bodenelemente kann dabei durch entsprechende Steuerung des Düsenstrahlwerkzeugs gestaltet werden: Zur Erzeugung einer Säule beziehungsweise eines etwa kreiszylindrischen Körpers wird das Düsenstrahlwerkzeug fortlaufend um seine Drehachse gedreht. Entsprechend können halbsäulenartige Körper durch Hin- und Herschwenken des Düsenstrahlwerkzeugs um die Drehachse während des Abteufens beziehungsweise während des Ziehens erzeugt werden. Lamellen lassen sich durch partielles Einbringen von Suspension mittels des Düsenstrahlwerkzeugs in verschiedenen Tiefen herstellen. Die an der Pegelstange erzeugten Schwingungen erlauben Rückschlüsse über die Eindringtiefe des Injektionsmittels in diesem Umfangsbereich, in dem die Pegelstange relativ zur Drehachse des Düsenstrahlwerkzeugs angeordnet ist, zu. Aus den ermittelten Informationen über den Radius in diesem Umfangsbereich kann gegebenenfalls der Durchmesser der Säule berechnet werden. Bei Herstellung einer Halbsäule oder Lamelle kann eine solche Durchmesserbestimmung entfallen, da sich diese Körper nur über einen Teilumfangsbereich um die Drehachse erstrecken.

Unabhängig von der Form des herzustellenden Bodenelements lässt sich mit dem Verfahren zuverlässig ermitteln, ob der Düsenstrahl beziehungsweise die Suspension ausgehend vom Düsenstrahlwerkzeug die gewünschte radiale Reichweite erreicht hat. Beim Drehen oder Schwenken des Düsenstrahlwerkzeugs um die eigene Achse passiert der Düsenstrahl die Pegelstange einmal je Umdrehung, beziehungsweise einmal je Schwenkbewegung. Ist der Düsenstrahl stark genug, trifft der Düsenstrahl beim Vorbeischwenken auf die Pegelstange, was an dieser zu Vibrationen führt. Diese Vibrationen können mittels geeigneter Sensoren erfasst und mittels einer Auswerteeinheit ausgewertet werden, so dass sich hierüber Rückschlüsse über die radiale Eindringtiefe des Düsenstrahls in den anstehenden Boden ziehen lassen. Hat der Düsenstrahl nicht die erforderliche Stärke, dass die Eindringtiefe bis zur Pegelstange reicht, werden entsprechend geringere oder keine Schwingungen erzeugt, das heißt der Radius der Bodensäule ist kleiner als der Abstand zwischen Bohrachse und Pegelstange.

Die Reihenfolge der Verfahrensführung ist vorzugsweise derart, dass zuerst die zumindest eine Pegelstange in den Boden eingebracht und anschließend das Düsenstrahlwerkzeug in definiertem Abstand von der mindestens einen Pegelstange bis zu der für die Herstellung der Bodensäule gewünschten Tiefe abgeteuft wird. Es ist jedoch prinzipiell eine umgekehrte Reihenfolge denkbar, das heißt erst Abteufen des Düsenstrahlwerkzeugs und anschließendes Einbringen einer oder mehrerer Pegelstangen in definiertem Abstand vom Düsenstrahlwerkzeug. Nach dem Abteufen des Düsenstrahlwerkzeugs bis zur Endtiefe wird der Düsenstrahl aktiviert, und das Werkzeug wird unter Drehung oder Schwenkbewegung nach oben gezogen. Während des Drehens und Ziehens wird aus einer oder mehreren Düsen ein Injektionsmittel unter hohem Druck und hohen Geschwindigkeiten ausgebracht, welches den anstehenden Boden erodiert. Zeitgleich mit dem Erodieren des Bodens kann Zementsuspension unter Druck zugeführt und durch die verfahrensbedingten Turbulenzen im unmittelbaren Produktionsbereich eingemischt werden. In Abwandlung des Verfahrens ist es auch denkbar, dass der Düsenstrahl bereits beim Abteufen aktiviert ist. In diesem Fall wäre die mindestens eine Pegelstange vorher in den Boden einzubringen. Der Betriebsdruck des Düsenstrahlmediums liegt vorzugsweise bei über 200 bar. Die Austrittsgeschwindigkeit des Düsenstrahlmedium kann mehr als 100 m/s betragen. Die Erosionsweite des Düsenstrahls im Baugrund reicht je nach Boden, Verfahrensart und verwendeter Flüssigkeit bis zu 2,5 m vom Bohrloch.

Das Injektionsmittel kann auf die Untergrundverhältnisse und das gewünschte Arbeitsergebnis abgestimmt beziehungsweise danach ausgewählt werden. Als Injektionsmittel können beispielsweise Flüssigkeiten, Wasser, Suspensionen, Zementleim, chemische Mittel in Form von Lösungen und/oder Emulsionen verwendet werden. Für die Verfestigung des Untergrundes, beispielsweise bei Unterfangungen oder Abdichtungen, wird insbesondere eine Suspension aus Wasser und Bindemittel verwendet. Als Bindemittel kommen insbesondere Mörtel, Zement, Utrafeinzemente, Silikatgele oder auch Kunststofflösungen in Frage. Zur Erhöhung der Erosionsleistung und damit der Reichweite kann der Düsenstrahl über eine Ringdüse zusätzlich mit Druckluft ummantelt werden. Mit dem Aushärten des Bindemittels entsteht ein halbsäulen-, säulen- oder lamellenförmiger Bodenverbesserungskörper.

Nach einer bevorzugten Verfahrensführung werden zwei Pegelstangen in den Boden eingebracht, wobei die beiden Pegelstangen in Bezug auf das Düsenstrahlwerkzeug in Umfangsrichtung versetzt zueinander, insbesondere auf gegenüberliegenden Seiten, angeordnet werden. Durch die Verwendung zweier Pegelstangen kann zuverlässig ermittelt werden, ob der Düsenstrahl beziehungsweise die herzustellende Bodensäule ausgehend vom Bohrwerkzeug rundherum die gewünschte Radialerstreckung beziehungsweise Durchmesser aufweist. Bei Verwendung von zwei Pegelstangen sind diese in Bezug auf das Bohrloch vorzugsweise diametral einander gegenüberliegend angeordnet, das heißt um 180° versetzt zueinander, wobei gewisse Winkelabweichungen von bis zu ±10° hiervon mit umfasst sein sollen. Selbstverständlich ist es auch denkbar 3 oder mehr Pegelstangen zu verwenden, die in Umfangsrichtung vorzugsweise gleichmäßig um das zu erstellende Bohrloch anzuordnen wären.

Die zumindest eine Pegelstange wird in einem Abstand von der Achse des Düsenstrahlwerkzeugs beziehungsweise des zu erstellenden Bohrlochs angeordnet, der vorzugsweise mindestens 0,75 Metern und/oder höchstens 1,25 Meter beträgt. Bei Verwendung mehrerer Pegelstangen ist nach einer günstigen Verfahrensführung vorgesehen, dass zumindest zwei der Pegelstangen gegenüber dem zu erstellenden Bohrloch unterschiedliche Abstände aufweisen. Durch die unterschiedlichen Abstände einer ersten Pegelstange und einer zweiten Pegelstange vom Bohrloch lässt sich der Durchmesser der hergestellten Bodensäule besonders zuverlässig ermitteln beziehungsweise steuern. So kann ein erster Abstand einer ersten Pegelstange gleich groß oder etwas größer gewählt werden als der gewünschte Radius der Bodensäule; die zweite Pegelstange kann auf einen zweiten Abstand eingestellt werden, der größer ist als der erste Abstand. Werden nun bei Drehung des Bohrwerkzeugs unter aktiviertem Düsenstrahl an der ersten Pegelstange Schwingungen ermittelt, während an der zweiten Pegelstange keine oder geringere Schwingungen entstehen, kann hieraus abgeleitet werden, dass der Radius der Bodensäule im Ringbereich zwischen der ersten und zweiten Pegelstange liegt. Insbesondere können die beiden Pegelstangen relativ zum Bohrloch derart angeordnet werden, dass die Differenz zwischen dem ersten Abstand (der ersten Pegelstange zur Bohrachse) und dem zweiten Abstand (der zweiten Pegelstange zur Bohrachse) zumindest 5 bis 10 cm und/oder maximal 15 bis 20 cm beträgt.

Der Sensor zum Erfassen von Schwingungen wird vorzugsweise am oberen Ende der jeweiligen Pegelstange angeordnet, welches insbesondere aus dem Boden herausragt. Die Sensoren werden mit einer Elektronikeinheit verbunden, weiche die Schwingungssignale weiterverarbeiten und speichern kann. Als Sensor wird nach einer günstigen Ausgestaltung ein Schwingungssensor, insbesondere ein Piezo-Sensor verwendet, wobei andere Schwingungssensoren nicht ausgeschlossen sind.

Als weiterer Verfahrensschritt ist nach einer günstigen Weiterbildung vorgesehen: Umwandeln der erfassten Schwingungssignale in akustische Signale mittels der Elektronikeinheit. Der Vorteil akustischer Signale ist, dass sich diese mittels marktüblicher Audio-Software einfach verarbeiten und gut visualisieren lassen. Jedes umlaufende Passieren der Pegelstange kann durch einen Peak dargestellt werden, so dass Größe und Regelmäßigkeit der Peaks Rückschlüsse über die Kontaktstärke zwischen Düsenstrahl und Pegelstange erlauben. Die akustischen Signale können aufgezeichnet und unmittelbar ausgewertet werden. Mittels einem Anzeigegerät wie einem Monitor können die Signale angezeigt werden.

Nach einer günstigen Ausgestaltung kann zumindest ein Parameter, mit dem die maximale radiale Reichweite des Düsenstrahls variabel einstellbar ist, in Abhängigkeit von den erfassten Schwingungssignalen gesteuert werden. Insbesondere lassen sich der oder die Parameter schon während des Prozesses steuern, das heißt die erfassten Informationen können unmittelbar verwendet werden, um Einfluss zu nehmen auf die Herstellung der Bodensäule. Als Parameter, mit denen sich die Eindringtiefe des Düsenstrahls und damit der Radius (beziehungsweise Durchmesser) der Bodensäule beeinflusst werden kann, können insbesondere die Drehgeschwindigkeit und/oder die Ziehgeschwindigkeit und/oder der Düsenstrahldruck des Düsenstrahlwerkzeugs verwendet werden.

Die Lösung der oben genannten Aufgabe besteht weiter in einer Anordnung zum Ermitteln des Radius einer mittels Düsenstrahlverfahren herstellbaren Bodensäule, umfassend: zumindest eine Pegelstange, die in den Boden einbringbar ist; ein mit der Pegelstange verbundener Sensor, welcher Schwingungen der Pegelstange erfassen kann; ein Düsenstrahlwerkzeug zum Herstellen eines Bodenkörpers; und eine Elektronikeinheit, die mit dem Sensor verbunden ist und vom Sensor erfasste Daten weiterverarbeiten kann.

Mit der erfindungsgemäßen Anordnung ergeben sich die im Zusammenhang mit dem vorgeschlagenen Verfahren genannten Vorteile, auf die insofern Bezug genommen wird. Im Ergebnis ermöglicht die Anordnung in vorteilhafter Weise eine sofortige Auswertung der Messungen schon während oder unmittelbar nach Fertigstellung der Bodensäule, wobei die Messergebnisse genaue Rückschlüsse über den Radius beziehungsweise den Durchmesser der Bodensäule erlauben.

Nach einer bevorzugten Ausgestaltung sind mehrere Pegelstangen vorgesehen, die jeweils einen Schwingungssensor aufweisen. Die zumindest eine Pegelstange ist vorzugsweise in Form einer Metallstange gestaltet. Metall bietet den Vorteil einer guten Leitfähigkeit von Körperschall, so dass das Schwingungssignal, das durch Auftreffen des Düsenstrahls auf die Stange erzeugt wird bis zum Sensor gut übertragen wird. Als Schwingungssensor können beispielsweise Piezo-Sensoren zum Einsatz kommen, die am oberen Ende der Stange befestigt werden und Schwingungen der Stange erfassen können.

Nach einer günstigen Ausgestaltung ist vorgesehen, dass die Elektronikeinheit eine Wandlungseinrichtung umfasst, mit der ein Schwingungssignal der jeweiligen Pegelstange in ein akustisches Signal umgewandelt werden kann. Es kann ferner eine Auswerteeinrichtung und/oder eine Anzeigeeinrichtung vorgesehen sein, mit der sich die akustischen Signale auswerten beziehungsweise anzeigen lassen.

Das Düsenstrahlwerkzeug kann Teil eines Bohrgeräts sein, welches das Werkzeug trägt und mit dem das Werkzeug in den Boden eingebracht werden kann.

.Ein bevorzugtes Ausführungsbeispiel wird nachstehend anhand der Zeichnungsfiguren erläutert. Hierin zeigt:
- Figur 1: eine erfindungsgemäße Anordnung zum Ermitteln des Radius einer mittels Düsenstrahlverfahren herstellbaren Bodensäule schematisch
a) in Seitenansicht;
b) in Draufsicht;
c) in Frontansicht mit abgeteuftem Dusenstrahlwerkzeug;
- Figur 2: schematisch eine ähnliche Anordnung in Draufsicht mit weiteren Einzelheiten;
a) Abstände der Pegelstangen;
b) das Düsenstrahlwerkzeug in einer ersten Drehposition;
c) das Düsenstrahlwerkzeug in einer zweiten Drehposition;
- Figur 3: ein erfindungsgemäßes Verfahren zum Ermitteln des Radius einer mittels Düsenstrahlverfahren herstellbaren Bodensäule;
- Figur 4: eine Auswertung von Schwingungsdaten auf Basis der erfindungsgemäß erfassten Schwingungssignale.

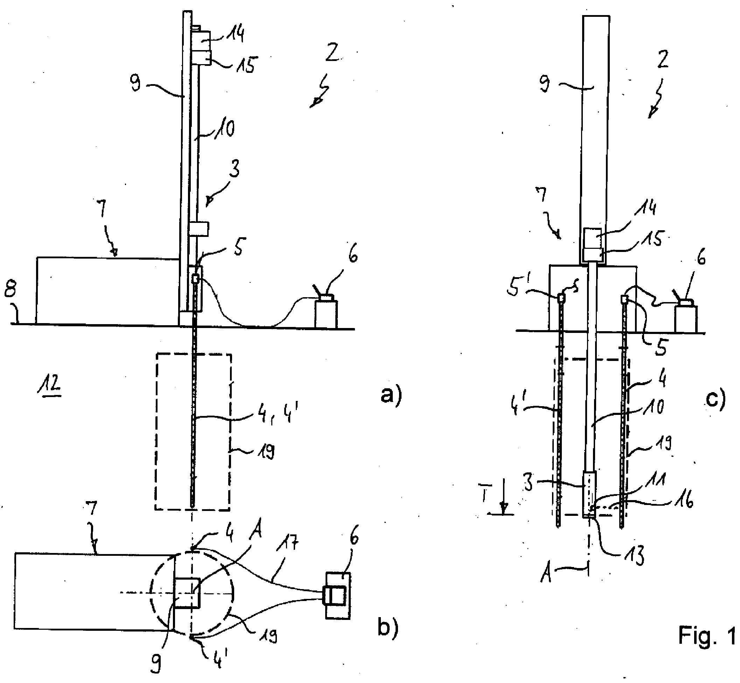

Die Figuren 1 bis 4 werden nachstehend gemeinsam beschrieben. Es sind eine Anordnung 2 und ein Verfahren zur Durchmesserbestimmung von Bodensäulen gezeigt, die mittels Düsenstrahlverfahren hergestellt werden, beziehungsweise zur Bestimmung der Reichweite des Düsenstrahls eines Düsenstrahlwerkzeugs. Die Anordnung 2 umfasst ein Düsenstrahlwerkzeug 3 sowie ein oder mehrere Pegelstangen 4 mit Schwingungssensoren 5 sowie eine Elektronikeinheit 6 zum Auswerten von Schwingungssignalen.

Das Düsenstrahlwerkzeug 3 ist Teil eines Bohrgeräts 7, welches auf einer Bodenoberfläche 8 steht. An dem Bohrgerät 2 ist ein Mäklermast 9 befestigt, welcher eine längs verfahrbare Tragvorrichtung (Schlitten) zum Tragen eines Düsenstrahlgestänges 10 für das Düsenstrahlwerkzeug 3 aufweist. Das Düsenstrahlwerkzeug 3 umfasst ein oder mehrere Austrittsdüsen 11, über die ein Injektionsmittel durch das Düsenstrahlgestänge 10 in den anstehenden Boden 12 ausgebracht werden kann, sowie gegebenenfalls eine Bohrkrone 13, die am Ende des Düsenstrahlgestänges 10 angeordnet ist.

Das Düsenstrahlgestänge 7 ist über die Tragvorrichtung mit dem Mäklermast 4 längsverschieblich verbunden. Am oberen Ende des Düsenstrahlgestänges 7 ist ein Spülkopf 14 vorgesehen, welcher sich vertikal am Mäkler 4 verfahren lässt, sowie ein Drehantrieb 15, der zum drehbaren, respektive schwenkbaren Antreiben des Düsenstrahlgestänges 10 dient. Der Spülkopf 14, der auch als Swivel bezeichnet wird, dient zum Anschließen von Leitungen zum Einleiten des Injektionsmittels. Als Injektionsmittel können Suspensionen aus Wasser und einem Bindemittel wie Zement, gegebenenfalls auch mit Luft ummantelt verwendet werden. Zum Absenken des Düsenstrahlwerkzeugs 3 in den Baugrund werden der Spülkopf 14 mit dem Düsenstrahlgestänge 10 nach unten verfahren.

Die Anordnung 2 umfasst ferner die Pegelstangen 4, 4' von denen vorliegend zwei vorgesehen sind. Jede Pegelstange 4, 4' weist einen Schwingungssensor 5, 5' auf, mit dem ein Schwingungen repräsentierendes Signal erfasst werden kann. Ein solches Signal kann beispielsweise der Körperschall oder Vibrationen der Pegelstange 4, 4' sein, die entstehen, wenn ein Düsenstrahl 16 auf die Pegelstange 4, 4' trifft. Die Schwingungssensoren 5, 5' sind jeweils am oberen Ende der zugehörigen Pegelstange 4, 4' angeordnet. Sie sind elektronisch mit der Elektronikeinheit 6 verbunden, an welche die Schwingungssignale weitergegeben werden. Die elektronische Verbindung ist vorliegend durch elektrische Leitungen 17 realisiert, wenngleich auch eine drahtlose Verbindung denkbar ist. Die Pegelstangen 4, 4' sind in Form von Metallstangen gestaltet, welche Schwingungen beziehungsweise Körperschall gut aus im Boden liegenden Bereichen bis zum Bereich des jeweiligen Sensors 5, 5' übertragen können. Die Schwingungssensoren können beispielsweise als Piezo-Sensoren gestaltet sein.

Die Elektronikeinheit 6 umfasst eine Wandlereinrichtung, mit der ein Schwingungssignal der jeweiligen Pegelstange 5, 5' in ein akustisches Signal umgewandelt werden kann. Es kann ferner eine Auswerteeinrichtung aufweisen, mit der die akustischen Signale ausgewertet werden können. Mit einem Audio-Analysator können Audiospektren aus den ermittelten Schwingungssignalen abgeleitet werden. Mit einer Anzeigeeinrichtung 18 lassen sich abgeleitete Informationen visualisieren. Hierfür kann die Elektronikeinheit beispielsweise eine Peak-/Levelanzeige für den oder die Schwingungssensoren aufweisen. Die akustischen Signale beziehungsweise Audiospektren können gegebenenfalls mittels einer Aufnahmeeinheit gespeichert werden, insbesondere in einem Ton-Dateiformat wie MP3. Mittels einer geeigneten Schnittstelle wie USB lassen sich die Daten auf einen Rechner übertragen.

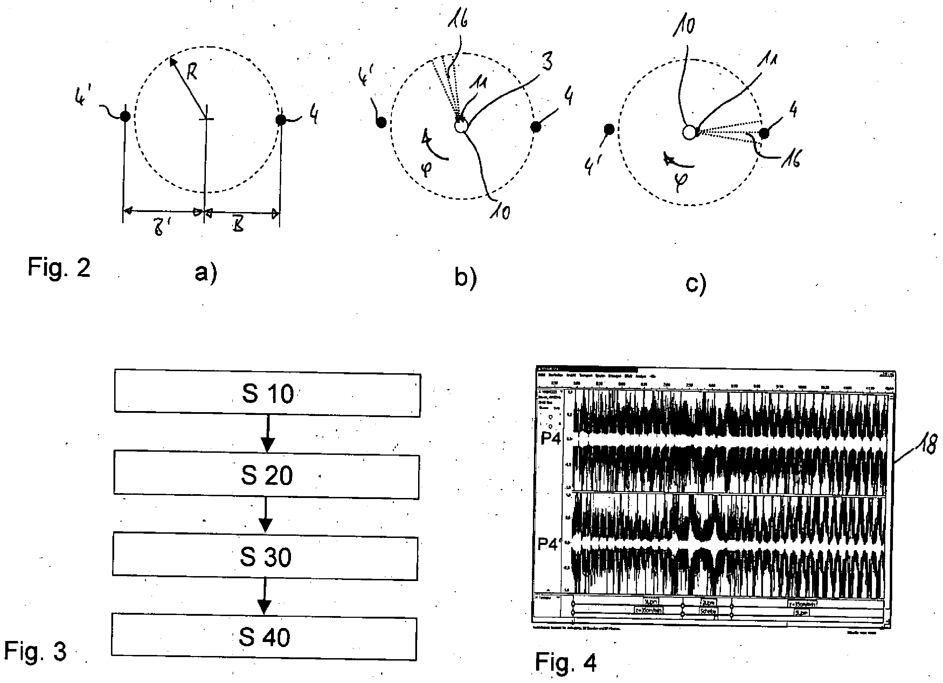

Das Verfahren wird folgendermaßen durchgeführt. In einem ersten Verfahrensschritt S10 werden die Pegelstangen 4, 4' in den Boden eingebracht. Vorliegend sind zwei Pegelstangen 4, 4' vorgesehen, die bei der Anordnung gemäß Figur 1 denselben Abstand von der Bohrachse A des zu erstellenden Bohrlochs haben. Alternativ hierzu können die Abstände der beiden Pegelstangen von der Achse des herzustellenden Bodenkörpers auch unterschiedlich groß sein, wie in Figur 2 gezeigt. Dort ist ein erster Abstand B der ersten Pegelstange 4 etwas größer gewählt als der gewünschte Radius R der Bodensäule; der zweite Abstand B' der zweiten Pegelstange 4' wird wiederum etwas größer gewählt als der erste Abstand B. Durch Positionierung der Pegelstangen 4, 4' mit unterschiedlichen Abständen zur Achse A lässt sich der Durchmesser der hergestellten Bodensäule besonders zuverlässig ermitteln beziehungsweise kontrollieren, da für verschiedene Eindringtiefen Messdaten gewonnen werden können.

Unabhängig von den Abständen untereinander, werden die Pegelstangen 4, 4' in Bezug auf das Bohrloch, respektive die Achse A des herzustellenden Bodenkörpers, vorzugsweise so angeordnet, dass sie dem Radius R des herzustellenden Bodenkörpers, respektive der Eindringtiefe des Düsenstrahls 16 zumindest entsprechen, das heißt gleich dem Radius R oder größer sind. Die Abstände B, B' zwischen jeweiliger Pegelstange und herzustellendem Bohrloch können zwischen 0,75 und 1,25 Metern liegen.

Im nächsten Verfahrensschritt S20 wird das Düsenstrahlwerkzeug 3 unter Drehbewegung um seine Achse A in den Boden abgeteuft, und zwar bis zur vorgesehenen Endtiefe T, welche den unteren Endpunkt des herzustellenden Bodenkörpers markiert. Das Düsenstrahlwerkzeug 3 kann prinzipiell auch ohne Drehbewegung in den Boden niedergebracht werden. Der abgeteufte Zustand des Düsenstrahlwerkzeugs ist in Figur 1c) gezeigt. Nachdem das Düsenstrahlwerkzeug 3 die gewünschte Endtiefe T erreicht hat wird der Bodenkörper hergestellt.

Das Herstellen des Bodenkörpers erfolgt im Verfahrensschritt S30 unter gleichzeitigem Erfassen von Schwingungssignalen. Hierfür wird das Düsenstrahlwerkzeug 3 unter Drehung nach oben gezogen, insbesondere bis zum Erreichen der Bodenkante 8, wobei beim Ziehen aus einer oder mehreren Düsen 11 Injektionsmittel unter hohem Druck austritt und den anstehenden Boden 12 erodiert und sich mit diesem vermischt. Nach Aushärten des im Injektionsmittels enthaltenen Bindemittels liegt ein Bodenkörper 19 vor, der zum besseren Verständnis in den Figuren 1a) bis 1c) gestrichelt eingezeichnet ist.

Die Drehbewegung des Düsenstrahlwerkzeuges 3 kann durch einen Phasenwinkel ϕ über der Zeit t definiert werden. In Figur 2b) ist das Düsenstrahlwerkzeug 3 in einer ersten Drehstellung gezeigt, in der die Austrittsdüse 11 beziehungsweise der Düsenstrahl 16 sich in einem Umfangsbereich zwischen den beiden Pegelstangen 4, 4' befindet. In Figur 2c) ist das Düsenstrahlwerkzeug 3 um die Bohrachse A weiter verdreht, wobei in der gezeigten Drehposition der Düsenstrahl 16 auf die erste Pegelstange 4 trifft und hier eine Schwingung erzeugt. Nach weiterem Drehen um 180° weist der Düsenstrahl 16 in Richtung zweiter Pegelstange 4'. Dadurch, dass diese weiter weg von der Werkzeugachse A entfernt ist, sind hier nur geringere oder gar keine Schwingungen messbar. Die Verfahrensführung erfolgt von unten nach oben. Während der Dreh- und Ziehbewegung des Düsenstrahlwerkzeugs 3 bei aktiviertem Düsenstrahl werden mittels der Schwingungssensoren 5 Schwingungen der Pegelstangen 4, 4' erfasst.

Die erfassten Schwingungssignale werden im nachfolgenden Verfahrensschritt S40 mittels der Elektronikeinheit 6 beziehungsweise einem hiermit verbindbaren Computer weiterverarbeitet und ausgewertet.

In Figur 4 ist eine solche Auswertung der Schwingungssignale dargestellt. Es ist in der oberen Reihe ein erstes Schwingungssignal P4 über der Zeit erkennbar, das aus den an der ersten Pegelstange 4 aufgenommenen Schwingungen ermittelt worden ist; in der unteren Reihe ein zweites Schwingungssignal P4' dargestellt, das auf den an der zweiten Pegelstange 4' aufgenommenen Schwingungen basiert. Anhand der grafisch dargestellten akustischen Schwingungssignale können Rückschlüsse über die Eindringtiefe des Düsenstrahls 16 und damit über den Durchmesser der hergestellten Bodensäule geschlossen werden.

Werden beispielsweise an der ersten Pegelstange 4, welche näher am Düsenstrahlwerkzeug 3 angeordnet ist, Schwingungen ermittelt, während an der zweiten Pegelstange 4', welche weiter weg angeordnet ist, geringere oder keine Schwingungen entstehen, kann geschlussfolgert werden, dass der Radius der Bodensäule im Ringbereich zwischen der ersten und zweiten Pegelstange 4, 4' liegt. Bei dem in Figur 2 gezeigten Beispiel ist die erste Pegelstange mit einem Abstand von etwa 90 cm von der Bohrachse beziehungsweise dem Düsenstrahlwerkzeug angeordnet, während der zweite Abstand der zweiten Pegelstange etwa 110 cm beträgt. Es versteht sich, dass die Pegelstangen auch den gleichen Abstand zur Achse A, beziehungsweise von den angegebenen Werten abweichende Abstände zur Achse A aufweisen können.

Die erfindungsgemäße Ermittlung der Eindringtiefe des Düsenstrahls eines Düsenstrahlwerkzeugs, respektive des Radius von mittels Düsenstrahlverfahren herzustellenden Bodensäulen, hat insgesamt den Vorteil, dass zeitgleich mit der Herstellung der Bodensäule ein Erfassen von Schwingungsdaten und gegebenenfalls eine Auswertung erfolgen kann. Somit lassen sich die Eindringtiefe des Düsenstrahls beeinflussende Parameter schnell nachregeln, so dass die herzustellende Bodensäule eine hohe Maßgenauigkeit hat. Es lassen sich zuverlässige Messungen auch in größeren Tiefen durchführen.

### Bezugszeichenliste

- 2: Anordnung
- 3: Düsenstrahlwerkzeug
- 4: Pegelstange
- 5: Sensor
- 6: Elektronikeinheit
- 7: Bohrgerät
- 8: Bodenoberfläche
- 9: Mäklermast
- 10: Düsenstrahlgestänge
- 11: Austrittsdüse
- 12: Boden
- 13: Bohrkrone
- 14: Spülkopf
- 15: Drehantrieb
- 16: Düsenstrahl
- 17: Leitung
- 18: Anzeigeeinrichtung
- 19: Bodenelement

- A: Drehachse / Säulenachse
- B: Abstand
- R: Radius
- T: Tiefe

## Patentansprüche

1. Verfahren zum Ermitteln des Radius einer mittels Düsenstrahlverfahrens herstellbaren Bodensäule, mit den Schritten:
Einbringen zumindest einer Pegelstange (4, 4') in den Boden (12) und Abteufen eines Düsenstrahlwerkzeugs (3) derart, dass die Pegelstange (4, 4') und das Düsenstrahlwerkzeug (3) einen definierten Abstand (B, B') voneinander aufweisen, der kleiner ist als eine maximale Reichweite (R) des Düsenstrahls (16);
Ziehen des Düsenstrahlwerkzeugs (3) unter Dreh- oder Schwenkbewegung bei aktiviertem Düsenstrahl (16), wobei beim Passieren des Düsenstrahls (16) an der Pegelstange (4, 4') Schwingungen erzeugt werden; und
Erfassen eines Schwingungen repräsentierenden Signals an der zumindest einen Pegelstange (4, 4') mittels eines Sensors (5, 5'), der mit der Pegelstange (4, 4') verbunden ist.

2. Verfahren nach Anspruch 1,
**dadurch gekennzeichnet,**
**dass** zwei Pegelstangen (4, 4') in den Boden (12) eingebracht werden, wobei die beiden Pegelstangen (4, 4') in Bezug auf das Düsenstrahlwerkzeug (3) in Umfangsrichtung versetzt zueinander, insbesondere auf gegenüberliegenden Seiten, angeordnet werden.

3. Verfahren nach Anspruch 1 oder 2,
**dadurch gekennzeichnet,**
**dass** die zumindest eine Pegelstange (4, 4') relativ zur Achse (A) des Düsenstrahlwerkzeugs (3) in einem Abstand (B, B') von mindestens 0,75 Metern und/oder von höchstens 1,25 Metern angeordnet wird.

4. Verfahren nach einem der Ansprüche 1 bis 3,
**dadurch gekennzeichnet,**
**dass** die beiden Pegelstangen (4, 4') mit unterschiedlichen Abständen (B, B') von der Achse (A) des Düsenstrahlwerkzeugs (3) angeordnet werden.

5. Verfahren nach einem der Ansprüche 1 bis 4,
**dadurch gekennzeichnet,**
**dass** die beiden Pegelstangen (4, 4') derart angeordnet werden, dass die Differenz zwischen dem ersten Abstand (B) der ersten Pegelstange (4) zur Achse (A) und dem zweiten Abstand (B') der zweiten Pegelstange (4') zur Achse (A) zumindest 10 cm und/oder maximal 20 cm beträgt.

6. Verfahren nach einem der Ansprüche 1 bis 5,
**dadurch gekennzeichnet,**
**dass** der Sensor (5, 5') an einem oberen Ende der Pegelstange (4, 4') angebracht wird.

7. Verfahren nach einem der Ansprüche 1 bis 6,
**dadurch gekennzeichnet,**
**dass** als Sensor (5, 5') ein Schwingungssensor, insbesondere ein Piezo-Sensor verwendet wird.

8. Verfahren nach einem der Ansprüche 1 bis 7,
**dadurch gekennzeichnet,**
**dass** als weiterer Verfahrensschritt vorgesehen ist:
Umwandeln der erfassten Schwingungssignale in akustische Signale mittels einer Elektronikeinheit (6).

9. Verfahren nach einem der Ansprüche 1 bis 8,
**dadurch gekennzeichnet,**
**dass** als weiterer Verfahrensschritt vorgesehen ist:
Aufzeichnen und/oder Anzeigen der akustischen Signale.

10. Verfahren nach einem der Ansprüche 1 bis 9,
**dadurch gekennzeichnet,**
**dass** als weiterer Verfahrensschritt vorgesehen ist:
Steuerung zumindest eines Parameters, mit dem die maximale radiale Reichweite (R) des Düsenstrahls (16) variabel einstellbar ist, insbesondere der Drehgeschwindigkeit und/oder der Ziehgeschwindigkeit und/oder des Düsenstrahldrucks des Düsenstrahlwerkzeugs (3), in Abhängigkeit von den erfassten Schwingungssignalen.

11. Anordnung zum Ermitteln des Radius einer mittels Düsenstrahlverfahrens herstellbaren Bodensäulen, umfassend:
zumindest eine Pegelstange (4, 4'), die in den Boden (12) einbringbar ist;
ein mit der Pegelstange (4, 4') verbundener Sensor (5, 5'), welcher Schwingungen der Pegelstange (4, 4') erfassen kann;
ein Düsenstrahlwerkzeug (3) zum Erzeugen einer Bodensäule durch Ausbringen eines Injektionsmittels unter Dreh- oder Schwenkbewegung des Düsenstrahlwerkzeugs, wobei beim Passieren des Düsenstrahls an der zumindest einen Pegelstange (4, 4') Schwingungen erzeugt werden; und
eine Elektronikeinheit (6), die mit dem Sensor (5, 5') verbunden ist und vom Sensor (5, 5') erfasste Daten weiterverarbeiten kann.

12. Anordnung nach Anspruch 11,
**dadurch gekennzeichnet,**
**dass** eine zweite Pegelstange (4') mit einem zweiten Sensor (5') vorgesehen ist.

13. Anordnung nach Anspruch 11 oder 12,
**dadurch gekennzeichnet,**
**dass** die zumindest eine Pegelstange (4, 4') in Form einer Metallstange gestaltet ist.

14. Anordnung nach einem der Ansprüche 11 bis 13,
**dadurch gekennzeichnet,**
**dass** die Elektronikeinheit (6) eine Wandlungseinrichtung umfasst, mit der ein Schwingungssignal in ein akustisches Signal umgewandelt werden kann.

15. Anordnung nach einem der Ansprüche 11 bis 14,
**dadurch gekennzeichnet,**
**dass** eine Auswerteeinrichtung und/oder Anzeigeeinrichtung vorgesehen sind.

## Claims

1. A process for determining the radius of a ground column which is produced by jet grouting, the process comprising the steps:
introducing at least one level rod (4, 4') into the ground (12) and lowering a jet grouting tool (3) such that the level rod (4, 4') und the jet grouting tool (3) comprise a defined distance (B, B') from one another, which is smaller than a maximum range (R) of the jet (16);
lifting the jet grouting tool (3) while carrying out rotational and pivoting movements while the jet (16) is activated, wherein, while the jet (16) is passing vibrations are generated at the level rod (4, 4'); and
recording a signal representing vibrations at the at least one level rod (4, 4') by means of a sensor (5, 5') which is fixed to the level rod (4, 4').

2. A process according to claim 1,
**characterised in**
**that** two level rods (4, 4') are introduced into the ground (12), wherein, with reference to the jet grouting tool (3), the two level rods (4, 4') are arranged so as to be circumferentially offset relative to one another, in particular on opposed sides.

3. A process according to claim 1 or 2,
**characterised in**
**that**, relative to the axis (A) of the jet grouting tool, the at least one level rod (4, 4') is arranged at a distance (B, B') of at least 0.75 metres and/or at most 1.25 metres.

4. A process according to any one of claims 1 to 3,
**characterised in**
**that** the two level rods (4, 4') are arranged at different distances (B, B') from the axis (A) of the jet grouting tool (3).

5. A process according to claims 1 to 4,
**characterised in**
**that** the two level rods (4, 4') are arranged in such a way that the difference between the first distance (B) of the first level rod (4) relative to the axis (A) and the second distance (B') of the second level rod (4') relative to the axis (A) amounts to at least 10 cm and/or at most 20 cm.

6. A process according to any one of claims 1 to 5,
**characterised in**
**that** the sensor (5, 5') is attached to an upper end of the level rod (4, 4').

7. A process according to any one of claims 1 to 6,
**characterised in**
**that** the sensor (5, 5') is provided in the form of a vibration sensor, in particular a piezo-sensor.

8. A process according to any one of claims 1 to 7,
**characterised in**
**that** it is provided as a further process step:
converting the recorded vibration signals into acoustic signals by means of an electronic unit (6).

9. A process according to any one of claims 1 to 8,
**characterised in**
**that** it is provided as a further process step:
recording and/or indicating the acoustic signals.

10. A process according to any one of claims 1 to 9,
**characterised in**
**that** it is provided as a further process step:
controlling at least one parameter, by which the maximum radial range (R) of the jet (16) can be variably adjusted, in particular controlling the rotational speed and/or the lifting speed and/or the jet grouting pressure of the jet grouting tool (3) as a function of the vibration signals detected.

11. An assembly for determining the radius of a ground column which is produced by jet grouting, comprising:
at least one level rod (4, 4') which can be introduced into the ground (12);
a sensor (5, 5') that is fixed at the level rod (4, 4') and that is configured to record vibrations of the level rod (4, 4');
a jet grouting tool (3) for producing a ground column by ejecting an injection material under rotational or pivoting movements of the jet grouting tool, wherein vibrations are generated when the grouting jet passes the at least one level rod (4, 4'); and
an electronic unit (6) that is connected to the sensor (5, 5') and can further process data recorded by the sensor (5, 5').

12. An assembly according to claim 11,
**characterised in**
**that** a second level rod (4') with a sensor (5') is provided.

13. An assembly according to claim 11 or 12,
**characterised in**
**that** the at least one level rod (4, 4') is provided in the form of a metal rod.

14. An assembly according to any one of claims 11 to 13,
**characterised in**
**that** the electronic unit (6) comprises a converter device by which a vibration signal can be converted into an acoustic signal.

15. An assembly according to any one of claims 11 to 14,
**characterised in**
**that** there is provided an evaluating unit and/or an indicating unit.

## Revendications

1. Procédé destiné à la détermination du rayon d'un élément de sol pouvant être fabriqué au moyen d'un procédé de courant-jet avec les étapes suivantes :
introduction d'au moins une tige de niveau (4, 4') dans le sol (12) et enfonçage d'un outil de courant-jet (3) de telle manière que la tige de niveau (4, 4') et l'outil de courant-jet (3) comportent une distance définie (B, B') l'un de l'autre, qui est plus petite d'une portée maximale (R) du courant-jet (16),
traction de l'outil de courant-jet (3) par mouvement de rotation ou de pivotement avec le courant-jet activé (16), des vibrations étant générées lors du passage du courant-jet (16) sur la tige de niveau (4, 4'), et
saisie d'un signal représentant les vibrations sur au moins une tige de niveau (4, 4') au moyen d'un capteur (5, 5'), qui est relié à la tige de niveau (4, 4').

2. Procédé selon la revendication 1, **caractérisé en ce que** deux tiges de niveau (4, 4') sont introduites dans le sol (12), les deux tiges de niveau (4, 4') étant disposées décalées dans la direction périphérique l'une par rapport à l'autre par rapport à l'outil de courant-jet (3), notamment sur les côtés opposés.

3. Procédé selon la revendication 1 ou 2, **caractérisé en ce qu'**au moins une tige de niveau (4, 4') est disposée par rapport à l'axe (A) de l'outil de courant-jet (3) à une distance (B, B') d'au moins 0, 75 mètre et/ou au maximum de 1, 25 mètres.

4. Procédé selon l'une quelconque des revendications 1 à 3, **caractérisé en ce que** les deux tiges (4, 4') sont disposées à des distances différentes (B, B') de l'axe (A) de l'outil de courant-jet (3).

5. Procédé selon l'une quelconque des revendications 1 à 4, **caractérisé en ce que** les deux tiges (4, 4') sont disposées de telle manière que la différence entre la première distance (B) de la première tige de niveau (4) de l'axe (A) et la deuxième distance (B') de la deuxième tige de niveau (4') de l'axe (A) est d'au moins 10 cm et/ou au maximum de 20 cm.

6. Procédé selon l'une quelconque des revendications 1 à 5, **caractérisé en ce que** le capteur (5, 5') est monté sur une extrémité supérieure de la tige de niveau (4, 4').

7. Procédé selon l'une quelconque des revendications 1 à 6, **caractérisé en ce qu'**un capteur de vibrations, notamment un piézocapteur, est utilisé comme capteur (5, 5').

8. Procédé selon l'une quelconque des revendications 1 à 7, **caractérisé en ce que** la conversion des signaux de vibrations saisis en signaux acoustiques au moyen d'une unité électronique (6) est prévue en tant qu'autre étape de procédé.

9. Procédé selon l'une quelconque des revendications 1 à 8, **caractérisé en ce que** l'enregistrement et/ou l'affichage des signaux acoustiques est prévu en tant qu'autre étape de procédé.

10. Procédé selon l'une quelconque des revendications 1 à 9, **caractérisé en ce que** la commande d'au moins un paramètre, avec lequel la portée radiale maximale (R) du courant-jet (16) peut être réglée, notamment de la vitesse de rotation et/ou de la vitesse de traction et/ou de la pression de courant-jet (3), en fonction des signaux de vibrations saisis est prévu en tant qu'autre étape de procède.

11. Agencement pour la détermination du rayon d'un élément de sol pouvant être fabriqué au moyen d'un procédé de courant-jet, comprenant :
au moins une tige de niveau (4, 4'), qui peut être introduite dans le sol (12),
un capteur (5, 5') relié à la tige de niveau (4, 4'), qui peut saisir les vibrations de la tige de niveau (4, 4'),
un outil de courant-jet (3) pour générer une colonne de sol par extraction d'un milieu d'injection par un mouvement de rotation ou de pivotement de l'outil de courant-jet, des vibrations étant générées sur au moins une tige de niveau (4, 4') lors du passage du courant-jet, et
une unité électronique (6) qui est reliée au capteur (5, 5') et peut traiter ultérieurement les données saisies par le capteur (5, 5').

12. Procédé selon la revendication 11, **caractérisé en ce qu'**une deuxième tige de niveau (4') est prévue avec un deuxième capteur (5').

13. Agencement selon la revendication 11 ou 12, **caractérisé en ce qu'**au moins une tige de niveau (4, 4') est configurée sous la forme d'une tige métallique.

14. Agencement selon l'une quelconque des revendications 11 à 13, **caractérisé en ce que** l'unité électronique (6) comprend un système de conversion avec lequel un signal de vibration peut être converti en un signal acoustique.

15. Procédé selon l'une quelconque des revendications 11 à 14, **caractérisé en ce qu'**un système d'évaluation et/ou un système d'affichage sont prévus.
